(19) Europäisches Patentamt
European Patent Office
Office européen des brevets

(11) **EP 1 871 068 B1**

(12) **EUROPEAN PATENT SPECIFICATION**

(45) Date of publication and mention
of the grant of the patent:
**15.07.2009 Bulletin 2009/29**

(51) Int Cl.:
*H04L 29/06* (2006.01)
*H04L 12/56* (2006.01)
*H04J 3/16* (2006.01)

(21) Application number: **07009094.9**

(22) Date of filing: **04.05.2007**

(54) **Method and device for generic framing procedure encapsulation**

Verfahren und Vorrichtung zur Einkapselung eines generischen Framings

Procédé et dispositif d'encapsulation de procédure de structure générique

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **23.06.2006 CN 200610090137**

(43) Date of publication of application:
**26.12.2007 Bulletin 2007/52**

(73) Proprietor: **Huawei Technologies Co., Ltd.
Longgang District
Shenzhen 518129 (CN)**

(72) Inventor: **Zhong, Laijun
Longgang District
Shenzhen 518129
Guangdong (CN)**

(74) Representative: **Manitz, Finsterwald & Partner
GbR
Postfach 31 02 20
80102 München (DE)**

(56) References cited:
**WO-A-01/17155**          **US-A- 2006 072 615**
**US-A1- 2003 112 833**     **US-A1- 2004 156 390**
**US-A1- 2007 104 485**

• **"Generic framing procedure (GFP)" ITU-T
STANDARD IN FORCE (I), INTERNATIONAL
TELECOMMUNICATION UNION, GENEVA,, CH,
no. G7041/Y1303 8/5, 22 August 2005
(2005-08-22), XP017404569**
• **XIAOMING HE ET AL: "Transporting Metro
Ethernet Services over Metropolitan Area
Networks" SENSOR NETWORKS, UBIQUITOUS,
AND TRUSTWORTHY COMPUTING, 2006. IEEE
INTERNATIONAL CONFERENCE ON TAICHUNG,
TAIWAN 05-07 JUNE 2006, PISCATAWAY, NJ,
USA,IEEE, 5 June 2006 (2006-06-05), pages
178-185, XP010919249 ISBN: 0-7695-2553-9**

**Description**

**Field of the Invention**

The present invention relates to the field of communication, and more particularly to a method and a device for Generic Framing Procedure (GFP) encapsulation.

**Background of the Invention**

The GFP, No. G.7041, is a recommendation published by the International Telecommunication Union-Telecommunication Standardization Sector (ITU-T), and the Protocol Data Units (PDUs) with different length can be transferred over transport networks such as Synchronous Digital Hierarchy (SDH)/Synchronous Optical Network (SONET), Plesiochronous Digital Hierarchy (PDH) or Optical Transmission Network (OTH) through the GFP encapsulation. Through the adaptation of the GFP encapsulation, the PDUs with different types or length could be transferred in the transport networks above.

Because of good compatibility of the GFP, the GFP becomes a preferred encapsulation method on the Multiservice Transport Platform (MSTP), and plays an important role in the interconnecting and interworking between devices produced by different manufacturers.

An SDH network is hereinafter taken as an example to describe the mechanism of the GFP.

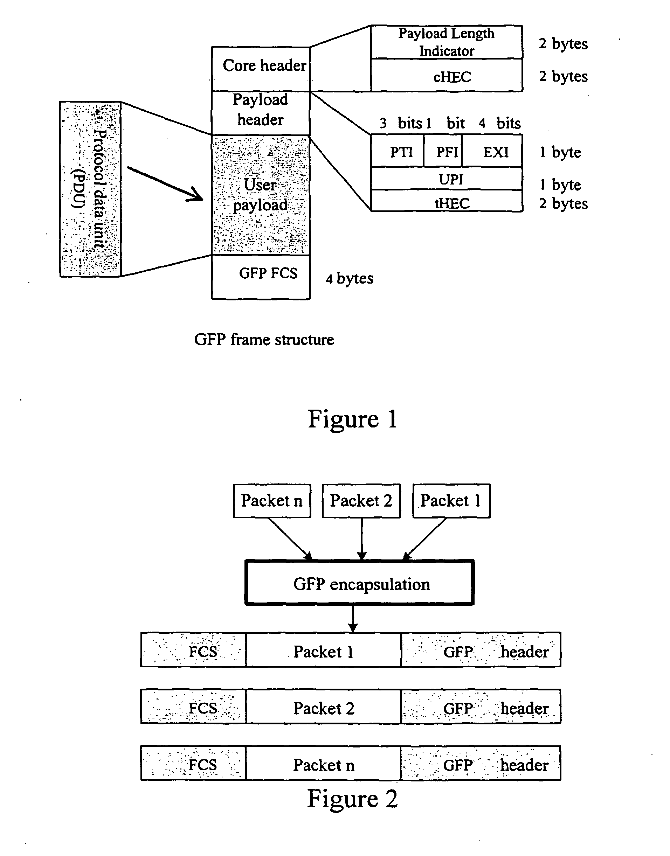

When a PDU needs to be transferred over the SDH network, a GFP header is added at the beginning of the PDU and a Frame Check Sequence (FCS) is added at the end of the PDU. The header information of the GFP and a format of the GFP encapsulation are shown in FIG. 1.

As shown in FIG. 1, the GFP mainly includes three parts of information.

A first part is a GFP core header with 4 bytes, including two fields; one of the two fields is a payload length indicator with 2 bytes for identifying the length of the PDU encapsulated in the GFP frame so that the PDUs varying in length may be mapped into the Virtual Container (VC) of SDH or the VC groups of SDH and that the boundary of the PDU can be defined through GFP encapsulation; the other of the two fields is a two-byte Core Header Error Check field containing a CRC-16 error control code that protects the integrity of the contents of the GFP core header by enabling both single-bit error correction and multi-bit error detection.

A second part is a GFP payload header with 4 bytes, including 5 fields described as follows:

a Payload Type Indicator (PTI) with 3 bits for identifying whether the GFP frame is a client data frame or a client management frame;
a Payload FCS Indicator (PFI) with 1 bit for identifying whether an FCS field of the GFP is added at the end of the GFP frame;
a frame header Extension Indicator (EXI) 4 bits for identifying whether the GFP frame includes an extension frame header and the type of the extension frame header;
a User Payload Indicator (UPI) with 8 bits for identifying the type of payload conveyed in the GFP Payload Information field, e.g. IP, Ethernet, Point to Point Protocol (PPP) frames, etc., in which different UPI codes identify different types of payloads;
a type Header Error Check (tHEC)containing a CRC-16 error control code that protects the integrity of the contents of a Type Field by enabling both single-bit error correction and multi-bit error detection, the Type Field includes PTI, PFI, EXI and UPI.

A third part is an FCS with 4 bytes, which is an optional field.

When a PDU is encapsulated through the GFP, the GFP header and the FCS will be added into the PDU. As shown in FIG. 2 illustrating the GFP mechanism, 8-12 bytes of the GFP header and the FCS will always be added into each PDU regardless of the length of the PDU. The GFP encapsulation efficiency can be calculated by the formula below:

$$\text{GFP encapsulation efficiency} = \frac{PDU\ length}{PDU\ length + GFP\ core\ header\ length + GFP\ payload\ length + GFP\ FCS\ field\ length}$$

As can be seen from the formula, the shorter the encapsulated PDU is, the higher the ratio of the overhead of the GFP frame to the GFP frame is, and the lower the encapsulation efficiency is; and vice versa.

Therefore, it is important to increase the GFP encapsulation efficiency of a short PDU so as to achieve higher bandwidth utilization. For instance, in 3rd Generation (3G) services, a voice service packet is usually a short packet with 20-40 bytes, if the voice service packet is directly encapsulated into the GFP frame with the FCS, the encapsulation efficiency is 62.5% ~ 76.9%

With such encapsulation efficiency, the application of the GFP is limited in occasions such as the 3G voice service transmission. In addition, because of the low efficiency of short PDU transmission, more redundant bandwidth shall be reserved during network construction, resulting in a much higher cost of equipments.

## Summary of the Invention

An embodiment of the present invention provides a method for Generic Framing Procedure (GFP) encapsulation.

The method for GFP encapsulation applicable to Multi-service-Transport Platform, MSTP, includes aggregating a plurality of protocol data units to form an aggregated packet through filling in header information of a protocol data unit aggregated and adding the header information of the protocol data unit aggregated at the beginning of the protocol data unit to be aggregated; and encapsulating the aggregated packet to obtain a GFP frame.

Another embodiment of the present invention provides a device for Generic Framing Procedure encapsulation (GFP).

The device for GFP encapsulation applicable to multi-service Transport Platform, MSTP, includes an aggregating module, for aggregating a plurality of protocol data units to form an aggregated packet, and a GFP encapsulation module, for encapsulating the aggregated packet to obtain a GFP frame; where the aggregating module includes:

a module of header information of a protocol data unit aggregated, for filling in the header information of the protocol data unit aggregated; and a combination module, for adding, at the beginning of the protocol data unit to be aggregated, the header information of the protocol data unit aggregated filled by the module of the header information of the protocol data unit aggregated.

According to the method and the device provided in the embodiments of the present invention, the encapsulation efficiency is increased effectively, and the bandwidth utilization is increased for the GFP transmission of short PDUs.

## Brief Description of the Drawings

FIG. 1 is a block diagram illustrating a GFP encapsulation format in the related art.

FIG. 2 is a schematic illustrating a method for GFP encapsulation in the related art.

FIG. 3 is a schematic illustrating a method for GFP encapsulation according to an embodiment of the present invention.

FIG. 4 shows the structure of header information of a PDU aggregated in an embodiment of the present invention.

FIG. 5 is a flowchart illustrating the process of aggregating a PDU according to an embodiment of the present invention,

FIG. 6 is a flowchart illustrating the process of de-aggregating an aggregated packet according to an embodiment of the present invention.

FIG. 7a is a flowchart illustrating the process of encapsulating an aggregated packet according to an embodiment of the present invention

FIG. 7b is a flowchart illustrating de-capsulation processing of an aggregated packet.

FIG. 8 is a flowchart illustrating another process of aggregating a PDU according to an embodiment of the present invention.

FIG. 9 is a flowchart illustrating another process of de-aggregating an aggregated packet according to an embodiment of the present invention.

**EP 1 871 068 B1**

FIG. 10 is a schematic illustrating a device of GFP encapsulation according to an embodiment of the present invention.

FIG. 11 is a schematic illustrating an encapsulation module according to an embodiment of the present invention.

FIG. 12 is another schematic illustrating a device of GFP encapsulation according to an embodiment of the present invention.

## Detailed Description of the Invention

Embodiments of the present invention are hereinafter described in detail with reference to the accompanying drawings.

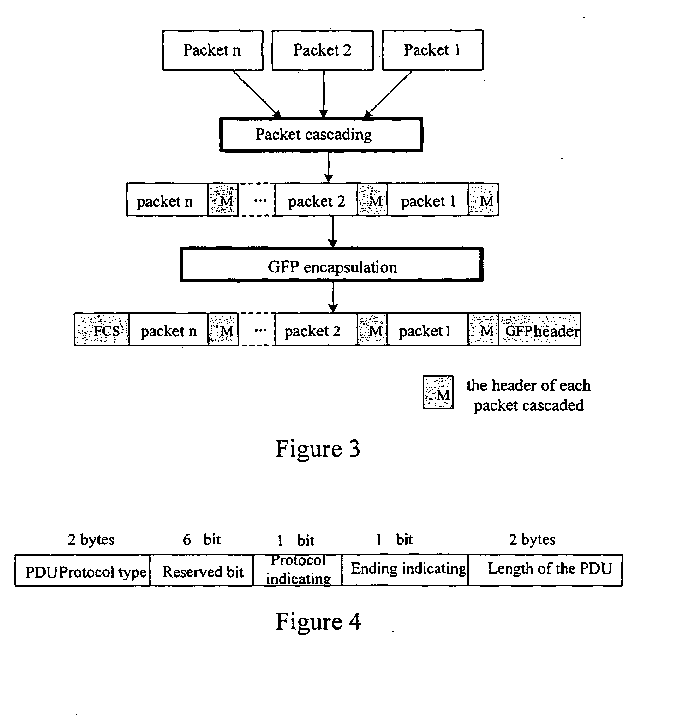

In an embodiment, a method for Generic Framing Procedure (GFP) encapsulation is provided. As shown in FIG.3, the packets shown in FIG.3 are PDUs in this embodiment, the method includes: aggregating a plurality of PDUs to form an aggregated packet and encapsulating the aggregated packet. Header information of packet aggregating is added at the beginning of each PDU to be encapsulated, which has multiple bytes.

As shown in FIG. 4, the header information of the PDU aggregated includes:

a length field of a PDU for indicating, in byte, the length of the PDU corresponding to the header information of the PDU aggregated; the width of the length field may be an integral multiple of 1 byte, in this embodiment, the width of the length field is set as 2 bytes; in this way, the aggregated packet may not occupy too much overhead even if the length of the aggregated packet reaches $2^{16}$ bytes;

an ending indicating bit with 1 bit for identifying whether the PDU corresponding to the header information of the PDU aggregated is the last one in the aggregated packet, and the value of 1 indicates the end of the aggregated packet;

a protocol indicating bit with 1 bit for identifying whether the protocol type of the PDU corresponding to the header information of the PDU aggregated is consistent with that of a first PDU with a protocol indicating bit; the value of 1 indicates that the protocol type in the aggregated packet is consistent; the protocol indicating bit of header information of the first PDU aggregated in the aggregated packet may not be set as 1;

a reserved bit for future extension, which is not defined yet;

a protocol type field of the PDU for identifying the protocol type of the PDU corresponding to the header information of the PDU aggregated, which is set as 2 bytes in this embodiment, and there is no such a protocol type field while the value of the protocol indicating bit is 1.

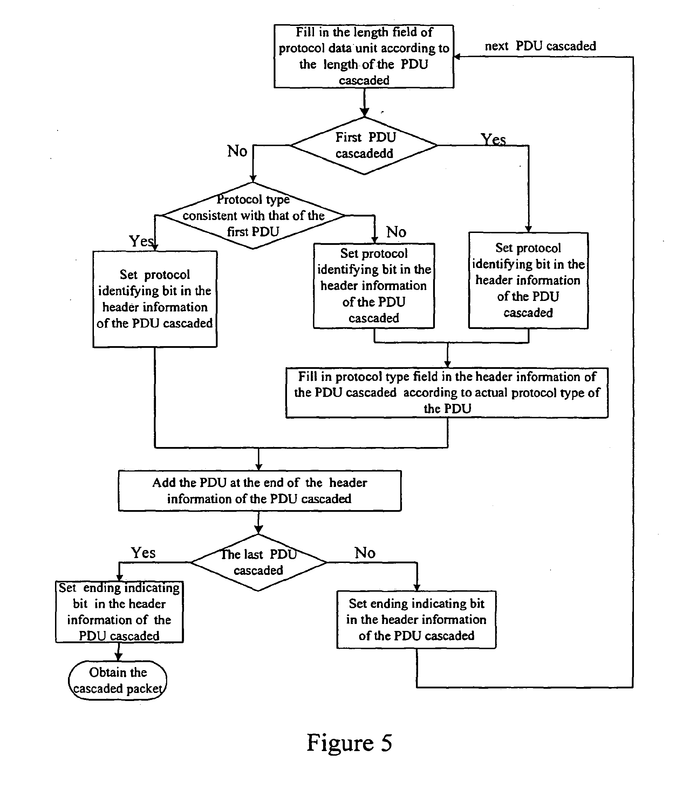

As shown in FIG. 5, the process of aggregating the PDUs to be encapsulated includes:

filling the length field of the PDU according to length of the PDU;

determining whether the PDU is the first PDU to be aggregated; if yes, setting the protocol indicating bit as 0 and adding the protocol type in the protocol type field of the PDU; if no, determining whether the protocol type of the PDU is consistent with that of the first PDU; if consistent, setting the protocol indicating bit as 1; if not consistent, setting the protocol indicating bit as 0 and adding the protocol type of the PDU in the protocol type field of the PDU; adding the PDU at the end of the header information of the PDU aggregated corresponding to the PDU, and determining whether the PDU is the last one to be aggregated; if the PDU is not the last one, setting the ending indicating bit as 0, and processing a next PDU to be aggregated according to the processes above; if the PDU is the last one, setting the ending indicating bit as 1 and terminating the process of aggregating the PDUs.

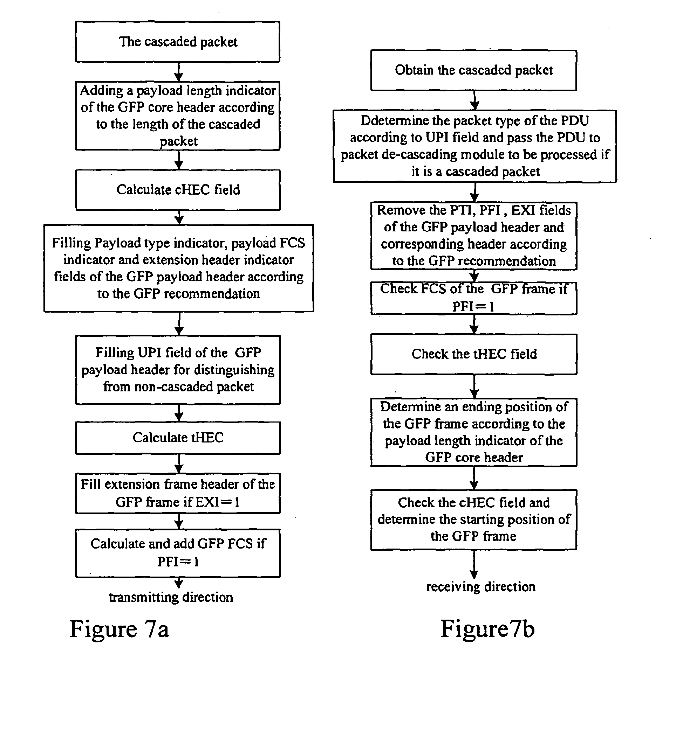

As shown in FIG. 7a, in the transmitting direction, the process of encapsulating the aggregated packet to obtain a GFP frame includes:

filling a payload length indicator field of the GFP core header according to the length of the aggregated packet, including the length of all the header information and the length of all PDUs cascaded;

calculating the core Header Error Check (cHEC) field;

filling the PTI, PFI and EXI fields of the GFP payload header according to the GFP recommendation;

filling a UPI field of the GFP payload header different from a non-aggregated packet;

calculating the tHEC;

filling an extension frame header of the GFP frame if the EXI field is non-zero; and

calculating and filling an FCS of the GFP frame if the PFI is 1.

As shown in FIG. 7b, in the receiving direction, the process of de-capsulating the GFP frame received includes:

4

checking the cHEC, and determining the starting position of the GFP frame;

determining the ending position of the GFP frame according to the payload length indicator field of the GFP core header;

checking the tHEC;

checking the FCS if the PFI is 1;

removing, according to the GFP recommendation, the PTI, PFI and EXI fields of the GFP payload header and the headers corresponding to the PTI, PFI and EXI fields;

determining the packet type of the PDU according to the User Payload Indicator (UPI) of the GFP payload header, and transferring the PDU to a packet de-aggregating module which implements the process of de-aggregating if the packet type of the PDU is a aggregated packet, i.e. splits the aggregated packet into a plurality of shorter PDUs.

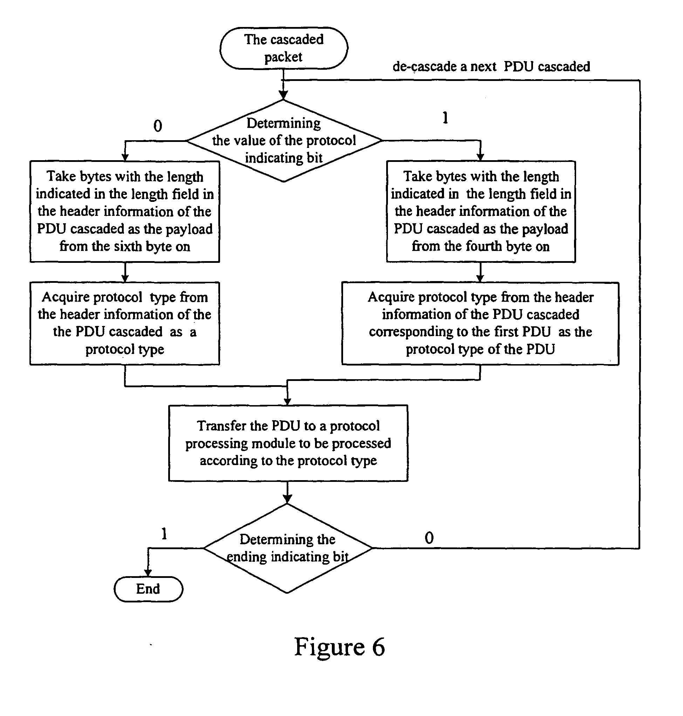

The process of de-aggregating a aggregated packet for splitting the aggregated packet into a plurality of shorter PDUs is shown in FIG. 6, including:

determining the value of the protocol indicating bit in the header information of the PDU aggregated; if the value is 1, taking, from the fourth byte on, bytes corresponding to the length indicated in the length field of the PDU in the header information of the PDU aggregated as the payload of the PDU, and acquiring a protocol type from the header information of the PDU aggregated corresponding to the first PDU, which is then taken as the protocol type of the PDU; if the value is 0, taking, from the sixth byte on, the byte of which the length is indicated by the length field of the PDU in the header information of the PDU aggregated as the payload of the PDU, and acquiring a protocol type from the header information of the PDU aggregated corresponding to the PDU, which is then taken as the protocol type of the PDU;

transferring, according to the protocol type, the PDU to a protocol processing module, which processes the PDU according to a known method;

determining the value of the ending indicating bit in the header information of the packet header; de-aggregating a next aggregated PDU if the value is 0, and terminating the process of de-capsulation if the value is 1.

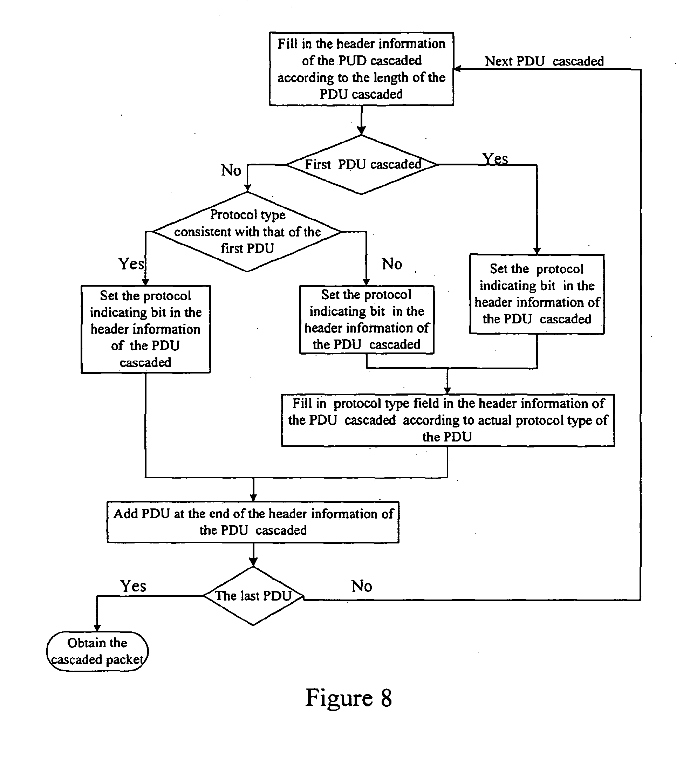

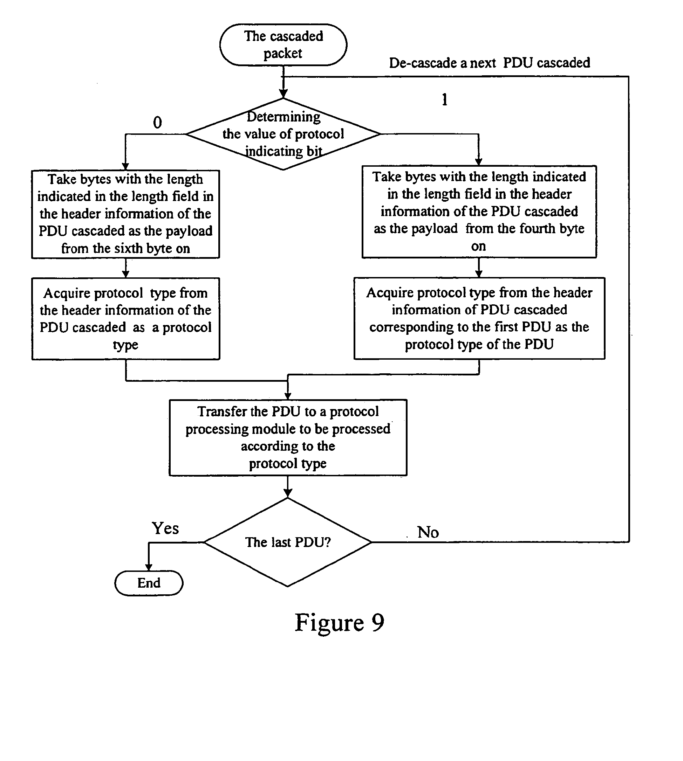

In another embodiment, what differs from the embodiment above is that there is no ending indicating bit in the header information of the PDU aggregated, and other processes are almost the same as those in the embodiment above. As shown in FIG. 8, there is not the process of setting the ending indicating bit when aggregating the PDUs to be encapsulated. Accordingly, as shown in FIG. 9, during the process of de-aggregating a aggregated packet for splitting the aggregated packet into a plurality of shorter PDUs, determine whether the PDU being processed is the last one instead of determining the value of the ending indicating bit in the header information of the PDU aggregated, if it is not the last one, de-cascade a next PDU aggregated, if it is the last one, terminate the process of de-aggregating the aggregated packet.

Then the boundary of the aggregated packet is determined according to the framing mechanism defined in GFP recommendation.

The GFP framing mechanism means that, according to the ITU-T G.7041 definition, and based on the cHEC byte of the GFP core header, if there are 4 sequential bytes meeting the cHEC relation, the GFP state machine determines that the 4 sequential bytes are the beginning of a GFP frame and implements the ECC, and the ending position of the GFP frame can be determined by a 16-bit Payload Length Indicator (PLI) field in the GFP core header.

According to the embodiments of the present invention, the bandwidth utilization is increased for the transmission of short PDUs with GFP encapsulation over the transport network. A new formula is:

$$\text{GFP encapsulation efficiency} = \frac{n \times PDU\,length}{n \times PDU\,packet\,length + n \times cascade\,header\,length + GFP\,header\,length + GFP\,FCS\,length}$$

In the new formula, the header information of the PDU aggregated usually has a length of 3 or 5 bytes, while the length will become more or less depending on the width of the length field of the PDU in the header information of the PDU aggregated.

When five 40-byte packets, for example, are encapsulated in an aggregated packet, the encapsulation efficiency is 84.4% as calculated by the new formula according to the embodiments of the present invention versus 76.9% calculated by the formula according to the prior mechanism, that is, the encapsulation efficiency is increased by 7.5%.

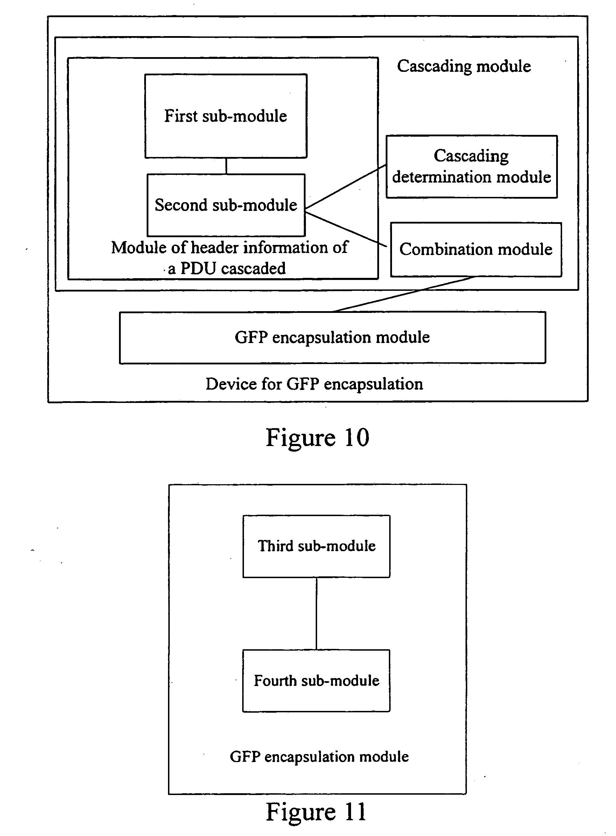

An embodiment of the present invention also provides a device for GFP encapsulation. As shown in Figure 10, the device includes an aggregating module for aggregating a plurality of PDUs to be encapsulated to form an aggregated packet; a GFP encapsulation module for encapsulating the aggregated packet to obtain a GFP frame.

The aggregating module may include:

a module of header information of a PDU aggregated, for filling in header information of the PDU aggregated;
a combination module, for adding the header information of the PDU aggregated from the module of the header information of the PDU aggregated to the beginning of a PDU to be encapsulated; and
an aggregating determination module, for determining whether the PDU is the last one to be aggregated, triggering the module of the header information of the PDU aggregated to fill in next header information of a PDU aggregated.

As shown in Figure 10, the module of the header information of the PDU aggregated includes:

a first sub-module, for determining whether the PDU is a first PDU to be aggregated, and whether the protocol type of the PDU is consistent with that of the first PDU;
a second sub-module, for filling in a length field of the PDU, setting the protocol indicating bit according to a determination result from the first sub-module, and filling a protocol type of the PDU in a protocol type field.

Referring to Figure 11, the GFP encapsulation module includes:

a third sub-module, for filling a payload length indicator field of the GFP core header according to the length of the aggregated packet from the combination module, and also filling a payload type indicator field, a payload FCS indicator field, an extension header indicator field of the GFP payload header, and filling an extension frame header of the GFP frame if the extension header indicator field is non-zero;
a fourth sub-module, for calculating a cHEC field and a tHEC field, setting a given value in a user payload indicator field of the GFP payload header.

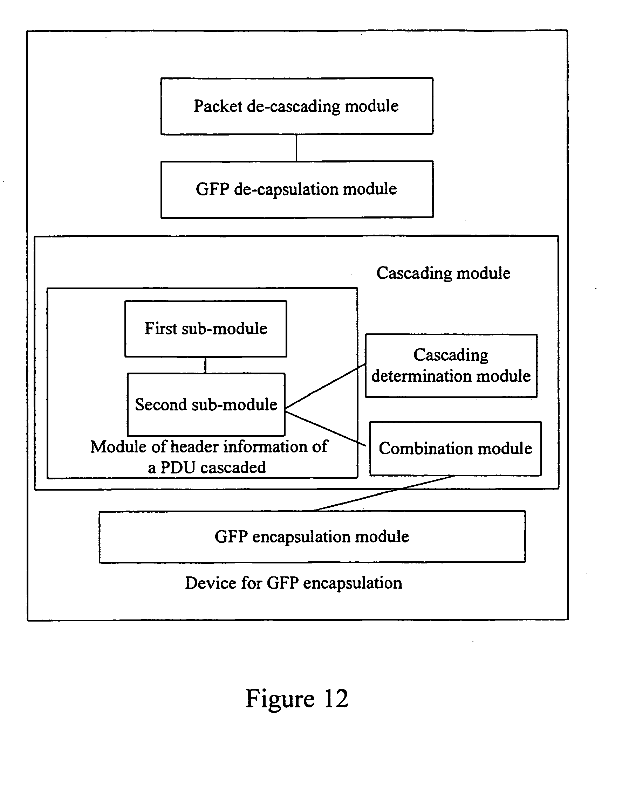

As show in Figure 12, the device further includes:

a GFP de-capsulation module, for checking at least one of the cHEC field and the tHEC field, and the FCS of the GFP frame, determining a starting position and an ending position of the GFP frame, and the protocol type of the PDU, and removing the payload type indicator, payload FCS indicator and extension header indicator fields of the GFP payload header and corresponding header.

The above embodiments illustrate the device aggregating and encapsulating the packet and transmitting the encapsulated packet outside when the packet is received. The device may also de-capsulate and de-aggregate the aggregated packet when the aggregated packet is received.

As show in Figure 12, the device may further include:

a packet de-aggregating module, for indicating an aggregated packet from the GFP de-capsulation module, obtaining a payload and a protocol type, processing the PDU and de-aggregating a next PDU aggregated.

The foregoing are only preferred embodiments of the present invention but not for use in limiting the present invention, those skilled in the art may make changes and variations on the basis of the present invention without departing from the spirit and scope thereof. For example, in the encapsulation process above, the processing sequence of the GFP payload header is subject to appropriate adjustments depending on the actual situations and requirements. For another example, the header information of the PDU aggregated may also be longer or shorter than the prevailing value of 3 or 5 bytes depending on the width of the length field of the PDU in the header information of the PDU aggregated.

**Claims**

1. A method for Generic Framing Procedure, GFP, encapsulation applicable to Multi-service Transport Platform, MSTP, comprising:

aggregating a plurality of protocol data units to form an aggregated packet through
filling in header information of a protocol data unit aggregated and adding the header information of the protocol data unit aggregated at the beginning of the protocol data unit to be aggregated; and
encapsulating the aggregated packet to obtain a GFP frame.

2. The method of Claim 1, wherein the header information of the protocol data unit aggregated comprises:

a length field of the protocol data unit for identifying the length of the protocol data unit corresponding to the header information of the protocol data unit aggregated;

a protocol identifying bit for identifying whether a protocol type of the protocol data unit corresponding to the header information of the protocol data unit aggregated is consistent with a protocol type of a first protocol data unit;

a protocol type field of the protocol data unit for identifying the protocol type of the protocol data unit corresponding to the header information of the protocol data unit aggregated.

3. The method of Claim 2, wherein the process of filling in the header information of the protocol data unit aggregated comprises:

filling in the length field of the protocol data unit according to the length of the protocol data unit to be aggregated;

determining whether the protocol data unit is a first protocol data unit to be aggregated;

if the protocol data unit is the first protocol data unit, setting the protocol identifying bit as 0 and filling the protocol type of the protocol data unit in the protocol type field of the protocol data unit;

otherwise, determining whether the protocol type of the protocol data unit is consistent with that of the first protocol data unit;

if the protocol type is consistent with that of the first protocol data unit, setting the protocol identifying bit as 1;

if not consistent, setting the protocol identifying bit as 0 and filling the protocol type of the protocol data unit in the protocol type field of the protocol data unit.

4. The method of Claim 3, wherein the header information of the protocol data unit aggregated further comprises an ending identifying bit for identifying whether the protocol data unit corresponding to the header information of the protocol data unit aggregated is a last protocol data unit in the aggregated packet.

5. The method of Claim 4, further comprising: setting the ending identifying bit as 0 when determining that the protocol data unit is not the last protocol data unit to be aggregated.

6. The method of any of Claims 1-5, wherein the process of encapsulating the aggregated packet comprises:

filling a payload length indicator field of a GFP core header according to the length of the aggregated packet;

calculating a core Header Error Check, cHEC, field;

filling a payload type indicator field, a payload Frame Check Sequence, FCS, indicator field and an extension header indicator field of a GFP payload header according to the GFP recommendation;

setting a given value in a user payload indicator field of the GFP payload header to indicate that what to be encapsulated is an aggregated packet;

calculating a type Header Error Check, tHEC, field;

filling an extension frame header of the GFP frame if the extension header indicator field is non- zero;

calculating and filling an FCS of the GFP frame if the payload FCS indicator field is set as 1.

7. The method of Claim 6, further comprising: de-capsulating the GFP frame.

8. The method of Claim 7, wherein the process of de-capsulating the GFP frame comprises:

checking the cHEC field, and determining a starting position of the GFP frame;

determining an ending position of the GFP frame according to the payload length indicator field of the GFP core header;

checking the tHEC field;

removing the payload type indicator field, the payload FCS indicator field and the extension header indicator field of the GFP payload header, and checking the FCS of the GFP frame if the payload FCS indicator of the GFP payload header is set as 1;

determining a packet type of the protocol data unit according to the user payload indicator field of the GFP payload header.

9. The method of Claim 8, further comprising: de-aggregating the aggregated packet if the packet type of the protocol data unit is an aggregated packet

10. The method of Claim 9, wherein the process of de-aggregating the aggregated packet comprises:

obtaining, according to a value of the protocol identifying bit in the header information of the protocol data unit aggregated, a payload of the protocol data unit and a protocol type of the protocol data unit;

de-aggregating, when the protocol data unit is not the last one or when the value of the ending indicating bit is 0, a next protocol data unit aggregated.

11. The method of Claim 10, wherein the process of obtaining the payload of the protocol data unit and the protocol type of the protocol data unit according to the value of the protocol identifying bit comprises:

when the value of protocol identifying bit is 0 which indicates that there is a protocol type field with 2 bytes following the protocol identifying bit, finding a first byte of the payload of the protocol data unit at the sixth byte from the beginning of the header information of the protocol data unit aggregated, and obtaining the payload of the protocol data unit with bytes corresponding to the length indicated in the length field of the protocol data unit in the header information of the protocol data unit aggregated, and obtaining the protocol type of the protocol data unit from the header information of the protocol data unit aggregated corresponding to the protocol data unit;

when the value of protocol identifying bit is 1 which indicates that there is no protocol type field following the protocol identifying bit, finding a first byte of the payload of the protocol data unit at the fourth byte from the beginning of the header information of the protocol data unit aggregated, and obtaining the payload of the protocol data unit with bytes corresponding to the length indicated in the length field of the protocol data unit in the header information of the protocol data unit aggregated, and obtaining the protocol type of the protocol data unit from the header information of the protocol data unit aggregated corresponding to the first protocol data unit.

12. A device for Generic Framing Procedure, GFP, encapsulation applicable to Multi-service Transport Platform, MSTP, comprising:

an aggregating module for aggregating a plurality of protocol data units to form an aggregated packet;

a GFP encapsulation module for encapsulating the aggregated packet to obtain a GFP frame;

wherein the aggregating module comprises:

a module of header information of a protocol data unit aggregated, for filling in the header information of the protocol data unit aggregated; and

a combination module, for adding, at the beginning of the protocol data unit to be aggregated, the header information of the protocol data unit aggregated filled by the module of the header information of the protocol data unit aggregated.

13. The device of Claim 12, wherein the aggregating module further comprises:

an aggregating determination unit, for determining whether the protocol data unit is the last one to be aggregated, and triggering the module of the header information of the protocol data unit aggregated to fill in next header information of a protocol data unit aggregated.

14. The device of claim 12 or 13, wherein the module of the header information of the protocol data unit aggregated comprises:

a first sub-module, for determining whether the protocol data unit is a first protocol data unit to be aggregated, and/or determining whether a protocol type of the protocol data unit is consistent with that of a first protocol data unit;

a second sub-module, for filling in a length field of the protocol data unit, setting the protocol identifying bit and filling the protocol type according to a determination result from the first sub-module.

15. The device of Claim 14, wherein the GFP encapsulation module comprises:

a third sub-module, for adding a payload length indicator field of the GFP core header according to the length of the aggregated packet from the combination module, and a payload type indicator field, a payload FCS indicator field, an extension header indicator field of a GFP payload header;

a fourth sub-module, for calculating a core Header Error Check, cHEC, field and a type Header Error Check, tHEC, field, and setting a given value in a user payload indicator field of the GFP payload header.

**16.** The device of Claim 15, further comprising:

a GFP de-capsulation module, for checking at least one of the cHEC field and the tHEC field, and the FCS of the GFP frame, determining a packet type of the protocol data unit, a starting position and an ending position of the GFP frame, and removing the payload type indicator field, the payload FCS indicator field and the extension header indicator field of the GFP payload header.

**17.** The device of Claim 16, further comprising:

a packet de-aggregating module, for identifying an aggregated packet from the GFP de-capsulation module, obtaining a payload of the protocol data unit and the protocol type of the protocol data unit, processing the protocol data unit the protocol type or de-aggregating next protocol data unit.

**Patentansprüche**

**1.** Verfahren zur Generic Framing Procedure-Einkapselung, GFP-Einkapselung, die auf eine Multi-Service Transport Platform, MSTP, anwendbar ist, umfassend, dass
mehrere Protokolldateneinheiten angesammelt werden, um ein angesammeltes Paket zu bilden, indem eine Header-Information einer angesammelten Protokolldateneinheit eingefügt wird und die Header-Information der angesammelten Protokolldateneinheit zu dem Beginn der anzusammelnden Protokolldateneinheit hinzugefügt wird; und
das angesammelte Paket eingekapselt wird, um einen GFP-Frame zu erhalten.

**2.** Verfahren nach Anspruch 1,
wobei die Header-Information der angesammelten Protokolldateneinheit umfasst:

ein Längenfeld der Protokolldateneinheit zum Identifizieren der Länge der Protokolldateneinheit, die der Header-Information der angesammelten Protokolldateneinheit entspricht;
ein Protokollidentifikationsbit zum Identifizieren, ob ein Protokolltyp der Protokolldateneinheit, die der Header-Information der angesammelten Protokolldateneinheit entspricht, mit einem Protokolltyp einer ersten Protokolldateneinheit übereinstimmt;
ein Protokolltypfeld der Protokolldateneinheit zum Identifizieren des Protokolltyps der Protokolldateneinheit, die der Header-Information der angesammelten Protokolldateneinheit entspricht.

**3.** Verfahren nach Anspruch 2,
wobei der Prozess des Einfügens der Header-Information der angesammelten Protokolldateneinheit umfasst, dass
das Längenfeld der Protokolldateneinheit gemäß der Länge der anzusammelnden Protokolldateneinheit eingefügt wird;
ermittelt wird, ob die Protokolldateneinheit eine erste anzusammelnde Protokolldateneinheit ist;
wenn die Protokolldateneinheit die erste Protokolldateneinheit ist, das Protokollidentifikationsbit auf 0 gesetzt wird und der Protokolltyp der Protokolldateneinheit in das Protokolltypfeld der Protokolldateneinheit eingefügt wird;
andernfalls ermittelt wird, ob der Protokolltyp der Protokolldateneinheit mit dem der ersten Protokolldateneinheit übereinstimmt; wenn der Protokolltyp mit dem der ersten Protokolldateneinheit übereinstimmt, das Protokollidentifikationsbit auf 1 gesetzt wird; wenn er nicht übereinstimmt, das Protokollidentifikationsbit auf 0 gesetzt wird und der Protokolltyp der Protokolldateneinheit in das Protokolltypfeld der Protokolldateneinheit eingefügt wird.

**4.** Verfahren nach Anspruch 3,
wobei die Header-Information der angesammelten Protokolldateneinheit ferner ein Endidentifikationsbit umfasst, um zu identifizieren, ob die Protokolldateneinheit, die der Header-Information der angesammelten Protokolldateneinheit entspricht, eine letzte Protokolldateneinheit in dem angesammelten Paket ist.

**5.** Verfahren nach Anspruch 4,
das ferner umfasst, dass das Endidentifikationsbit auf 0 gesetzt wird, wenn ermittelt wird, dass die Protokolldateneinheit nicht die letzte anzusammelnde Protokolldateneinheit ist.

**6.** Verfahren nach einem der Ansprüche 1 - 5,
wobei der Prozess des Einkapselns des angesammelten Pakets umfasst, dass
ein Nutzdatenlängenindikatorfeld eines GFP-Kern-Header gemäß der Länge des angesammelten Pakets eingefügt wird;

ein Kern-Header-Fehlerüberprüfungsfeld, cHEC-Feld, berechnet wird;

ein Nutzdatentypindikatorfeld, ein Nutzdaten-Frame-Überprüfungssequenz-Indikatorfeld, Nutzdaten-FCS-Indikatorfeld, und ein Erweiterungs-Header-Indikatorfeld eines GFP-Nutzdaten-Header gemäß dem GFP-Ansatz eingefügt werden;

ein gegebener Wert in einem Benutzernutzdatenindikatorfeld des GFP-Nutzdaten-Header gesetzt wird, um anzugeben, dass das, was einzukapseln ist, ein angesammeltes Paket ist;

ein Typ-Header-Fehlerüberprüfungsfeld, tHEC-Feld, berechnet wird; ein Erweiterungs-Frame-Header des GFP-Frame eingefügt wird, wenn das Erweiterungs-Header-Indikatorfeld nicht Null ist;

eine FCS des GFP-Frame berechnet und eingefügt wird, wenn das Nutzdaten-FCS-Indikatorfeld auf 1 gesetzt ist.

7.  Verfahren nach Anspruch 6,
    das ferner umfasst, dass der GFP-Frame entkapselt wird.

8.  Verfahren nach Anspruch 7,
    wobei der Prozess des Entkapselns des GFP-Frame umfasst, dass das cHEC-Feld überprüft wird und eine Startposition des GFP-Frame ermittelt wird;
    eine Endposition des GFP-Frame gemäß dem Nutzdatenlängenindikatorfeld des GFP-Kern-Header ermittelt wird;
    das tHEC-Feld überprüft wird;
    das Nutzdatentypindikatorfeld, das Nutzdaten-FCS-Indikatorfeld und das Erweiterungs-Header-Indikatorfeld des GFP-Nutzdaten-Header entfernt werden und die FCS des GFP-Frame überprüft wird, wenn der Nutzdaten-FCS-Indikator des GFP-Nutzdaten-Header auf 1 gesetzt ist;
    ein Pakettyp der Protokolldateneinheit gemäß dem Benutzernutzdatenindikatorfeld des GFP-Nutzdaten-Header ermittelt wird.

9.  Verfahren nach Anspruch 8,
    das ferner umfasst, dass das angesammelte Paket aufgeteilt wird, wenn der Pakettyp der Protokolldateneinheit ein angesammeltes Paket ist.

10. Verfahren nach Anspruch 9,
    wobei der Prozess des Aufteilens des angesammelten Pakets umfasst, dass
    gemäß einem Wert des Protokollidentifikationsbit in der Header-Information der angesammelten Protokolldateneinheit Nutzdaten der Protokolldateneinheit und ein Protokolltyp der Protokolldateneinheit erhalten werden;
    wenn die Protokolldateneinheit nicht die letzte ist oder wenn der Wert des Endindikationsbit 0 ist, eine nächste angesammelte Protokolldateneinheit aufgeteilt wird.

11. Verfahren nach Anspruch 10, wobei der Prozess des Erhaltens der Nutzdaten der Protokolldateneinheit und des Protokolltyps der Protokolldateneinheit gemäß dem Wert des Protokollidentifikationsbit umfasst, dass
    wenn der Wert des Protokollidentifikationsbit 0 ist, was angibt, dass es ein Protokolltypfeld mit 2 Byte dem Protokollidentifikationsbit folgend gibt, ein erstes Byte der Nutzdaten der Protokolldateneinheit an dem sechsten Byte von dem Beginn der Header-Information der angesammelten Protokolldateneinheit aus gefunden wird und die Nutzdaten der Protokolldateneinheit mit Bytes erhalten werden, die der Länge entsprechen, die in dem Längenfeld der Protokolldateneinheit in der Header-Information der angesammelten Protokolldateneinheit angegeben ist, und der Protokolltyp der Protokolldateneinheit aus der Header-Information der angesammelten Protokolldateneinheit, die der Protokolldateneinheit entspricht, erhalten wird; wenn der Wert des Protokollidentifikationsbit 1 ist, was angibt, dass es kein Protokolltypfeld dem Protokollidentifikationsbit folgend gibt, ein erstes Byte der Nutzdaten der Protokolldateneinheit an dem vierten Byte von dem Beginn der Header-Information der angesammelten Protokolldateneinheit aus gefunden wird und die Nutzdaten der Protokolldateneinheit mit Bytes erhalten werden, die der Länge entsprechen, die in dem Längenfeld der Protokolldateneinheit in der Header-Information der angesammelten Protokolldateneinheit angegeben ist, und der Protokolltyp der Protokolldateneinheit aus der Header-Information der angesammelten Protokolldateneinheit, die der ersten Protokolldateneinheit entspricht, erhalten wird.

12. Vorrichtung für eine Generic Framing Procedure-Einkapselung, GFP-Einkapselung, die auf eine Multi-Service Transport Platform, MSTP, anwendbar ist, umfassend:

    ein Ansammlungsmodul zum Ansammeln mehrerer Protokolldateneinheiten, um ein angesammeltes Paket zu bilden;
    ein GFP-Einkapselungsmodul zum Einkapseln des angesammelten Pakets, um einen GFP-Frame zu erhalten;

wobei das Ansammlungsmodul umfasst:

ein Modul der Header-Information einer angesammelten Protokolldateneinheit zum Einfügen der Header-Information der angesammelten Protokolldateneinheit; und
ein Kombinationsmodul, um zu dem Beginn der anzusammelnden Protokolldateneinheit die Header-Information der angesammelten Protokolldateneinheit hinzuzufügen, die durch das Modul der Header-Information der angesammelten Protokolldateneinheit eingefügt wird.

**13.** Vorrichtung nach Anspruch 12, wobei das Ansammlungsmodul ferner umfasst:

eine Ansammlungsermittlungseinheit zum Ermitteln, ob die Protokolldateneinheit die letzte anzusammelnde ist, und zum Auslösen des Moduls der Header-Information der angesammelten Protokolldateneinheit, um eine nächste Header-Information einer angesammelten Protokolldateneinheit einzufügen.

**14.** Vorrichtung nach Anspruch 12 oder 13,
wobei das Modul der Header-Information der angesammelten Protokolldateneinheit umfasst:

ein erstes Submodul zum Ermitteln, ob die Protokolldateneinheit eine erste anzusammelnde Protokolldateneinheit ist, und/oder zum Ermitteln, ob ein Protokolltyp der Protokolldateneinheit mit dem einer ersten Protokolldateneinheit übereinstimmt;
ein zweites Submodul zum Einfügen eines Längenfelds der Protokolldateneinheit, Setzen des Protokollidentifikationsbit und Einfügen des Protokolltyps gemäß einem Ermittlungsergebnis von dem ersten Submodul.

**15.** Vorrichtung nach Anspruch 14, wobei das GFP-Einkapselungsmodul umfasst:

ein drittes Submodul zum Hinzufügen eines Nutzdatenlängenindikatorfelds des GFP-Kern-Header gemäß der Länge des angesammelten Pakets von dem Kombinationsmodul und eines Nutzdatentypindikatorfelds, eines Nutzdaten-FCS-Indikatorfelds, eines Erweiterungs-Header-Indikatorfelds eines GFP-Nutzdaten-Header;
ein viertes Submodul zum Berechnen eines Kern-Header-Fehlerüberprüfungsfelds, cHEC-Feld, und eines Typ-Header-Fehlerüberprüfungsfelds, tHEC-Feld, und Setzen eines gegebenen Werts in einem Benutzernutzdatenindikatorfeld des GFP-Nutzdaten-Header.

**16.** Vorrichtung nach Anspruch 15, ferner umfassend:

ein GFP-Entkapselungsmodul zum Überprüfen von mindestens einem von dem cHEC-Feld und dem tHEC-Feld und der FCS des GFP-Frame, Ermitteln eines Pakettyps der Protokolldateneinheit, einer Startposition und einer Endposition des GFP-Frame und Entfernen des Nutzdatentypindikatorfelds, des Nutzdaten-FCS-Indikatorfelds und des Erweiterungs-Header-Indikatorfelds des GFP-Nutzdaten-Header.

**17.** Vorrichtung nach Anspruch 16, ferner umfassend:

ein Paketaufteilungsmodul zum Identifizieren eines angesammelten Pakets von dem GFP-Entkapselungsmodul, Erhalten von Nutzdaten der Protokolldateneinheit und des Protokolltyps der Protokolldateneinheit, Verarbeiten der Protokolldateneinheit des Protokolltyps oder Aufteilen einer nächsten Protokolldateneinheit.

**Revendications**

**1.** Procédé d'encapsulation pour une procédure générique de tramage, GFP pour « *Generic Framing Procedure* », applicable à une plate-forme de transport multi-services, MSTP pour « *Multi-service Transport Platform* », comprenant les étapes consistant à :

agréger une pluralité d'unités de données de protocole pour former un paquet agrégé, en renseignant des informations d'en-tête d'une unité de données de protocole agrégée et en ajoutant les informations d'en-tête de l'unité de données de protocole agrégée au début de l'unité de données de protocole à agréger ; et encapsuler le paquet agrégé pour obtenir une trame GFP.

**2.** Procédé selon la revendication 1, dans lequel les informations d'en-tête de l'unité de données de protocole agrégée comprennent :

une zone de longueur de l'unité de données de protocole, destinée à identifier la longueur de l'unité de données de protocole correspondant aux informations d'en-tête de l'unité de données de protocole agrégée ;
un bit d'identification de protocole, destiné à identifier si le type de protocole de l'unité de données de protocole correspondant aux informations d'en-tête de l'unité de données de protocole agrégée est compatible avec le type de protocole d'une première unité de données de protocole ;
une zone de type de protocole de l'unité de données de protocole, destinée à identifier le type de protocole de l'unité de données de protocole correspondant aux informations d'en-tête de l'unité de données de protocole agrégée.

3. Procédé selon la revendication 2, dans lequel le processus de renseignement des informations d'en-tête de l'unité de données de protocole agrégée comprend les étapes consistant à :

renseigner la zone de longueur de l'unité de données de protocole en fonction de la longueur de l'unité de données de protocole à agréger ;
déterminer si l'unité de données de protocole est une première unité de données de protocole à agréger ;
si l'unité de données de protocole est la première unité de données de protocole, mettre à 0 le bit d'identification de protocole et renseigner le type de protocole de l'unité de données de protocole, dans la zone de type de protocole de l'unité de données de protocole ;
sinon, déterminer si le type de protocole de l'unité de données de protocole est compatible avec celui de la première unité de données de protocole ;
si le type de protocole est compatible avec celui de la première unité de données de protocole, mettre à 1 le bit d'identification de protocole ;
s'il n'est pas compatible, mettre à 0 le bit d'identification de protocole et renseigner le type de protocole de l'unité de données de protocole dans la zone de type de protocole de l'unité de données de protocole.

4. Procédé selon la revendication 3, dans lequel les informations d'en-tête de l'unité de données de protocole agrégée comprennent en outre un bit d'identification de fin, destiné à identifier si l'unité de données de protocole correspondant aux informations d'en-tête de l'unité de données de protocole agrégée est la dernière unité de données de protocole dans le paquet agrégé.

5. Procédé selon la revendication 4, comprenant en outre l'étape consistant à mettre à 0 le bit d'identification de fin lorsqu'il est déterminé que l'unité de données de protocole n'est pas la dernière unité de données de protocole à agréger.

6. Procédé selon l'une quelconque des revendications 1 à 5, dans lequel l'étape d'encapsulation du paquet agrégé comprend les étapes consistant à :

renseigner une zone d'indicateur de longueur de charge utile d'un en-tête principal GFP, en fonction de la longueur du paquet agrégé ;
calculer une zone de contrôle d'erreur d'en-tête principal, cHEC pour « *core Header Error Check* » ;
renseigner une zone d'indicateur de type de charge utile, une zone d'indicateur de séquence de contrôle de trames de charge utile, FCS pour « *Frame Check Sequence* » et une zone d'indicateur d'en-tête d'extension d'un en-tête de charge utile GFP, sur la base de la recommandation GFP ;
placer une valeur donnée dans une zone d'indicateur de charge utile d'utilisateur dans l'en-tête de charge utile GFP, afin d'indiquer que ce qui doit être encapsulé est un paquet agrégé ;
calculer une zone de contrôle d'erreur d'en-tête de type, tHEC pour « *type Header Error Check* » ;
renseigner un en-tête de trame d'extension de la trame GFP si la zone d'indicateur d'en-tête d'extension n'est pas nulle ;
calculer et renseigner un indicateur FCS de la trame GFP si la zone d'indicateur FCS de charge utile est renseignée à 1.

7. Procédé selon la revendication 6, comprenant en outre l'étape consistant à décapsuler la trame GFP.

8. Procédé selon la revendication 7, dans lequel l'étape de décapsulation de la trame GFP comprend les étapes consistant à :

examiner la zone cHEC et déterminer une position de départ de la trame GFP ;

déterminer une position de fin de la trame GFP en fonction de la zone d'indicateur de longueur de charge utile dans l'en-tête principal GFP ;

examiner la zone tHEC ;

supprimer la zone d'indicateur de type de charge utile, la zone d'indicateur de FCS de charge utile et la zone d'indicateur d'en-tête d'extension de l'en-tête de charge utile GFP et examiner l'indicateur FCS de la trame GFP si l'indicateur FCS de charge utile, dans l'en-tête de charge utile GFP, est renseigné à 1 ;

déterminer un type de paquet de l'unité de données de protocole en fonction de la zone d'indicateur de charge utile d'utilisateur dans l'en-tête de charge utile GFP.

9. Procédé selon la revendication 8, comprenant en outre l'étape consistant à désagréger le paquet agrégé si le type de paquet de l'unité de données de protocole est un paquet agrégé.

10. Procédé selon la revendication 9, dans lequel le processus de désagrégation du paquet agrégé comprend les étapes consistant à :

en fonction d'une valeur du bit d'identification de protocole dans les informations d'en-tête de l'unité de données de protocole agrégée, obtenir une charge utile de l'unité de données de protocole et un type de protocole de l'unité de données de protocole ;

si l'unité de données de protocole agrégée n'est pas la dernière ou si la valeur du bit d'indication de fin est zéro, désagréger une unité de données de protocole agrégée suivante.

11. Procédé selon la revendication 10, dans lequel le processus d'obtention de la charge utile de l'unité de données de protocole et le type de protocole de l'unité de données de protocole, en fonction de la valeur du bit d'identification de protocole, comprend les étapes consistant à :

si la valeur du bit d'identification de protocole est zéro, ce qui indique qu'il existe une zone de type de protocole de 2 octets suivant le bit d'identification de protocole, trouver le premier octet de la charge utile de l'unité de données de protocole au sixième octet à partir du début des informations d'en-tête de l'unité de données de protocole agrégée et obtenir la charge utile de l'unité de données de protocole, avec un nombre d'octets correspondant à la longueur indiquée dans la zone de longueur de l'unité de données de protocole, dans les informations d'en-tête de l'unité de données de protocole agrégée, puis obtenir le type de protocole de l'unité de données de protocole dans les informations d'en-tête de l'unité de données de protocole agrégée correspondant à l'unité de données de protocole ;

si la valeur du bit d'identification de protocole est un, ce qui indique qu'il n'existe pas de zone de type de protocole suivant le bit d'identification de protocole, trouver le premier octet de la charge utile de l'unité de données de protocole au quatrième octet à partir du début des informations d'en-tête de l'unité de données de protocole agrégée et obtenir la charge utile de l'unité de données de protocole, avec un nombre d'octets correspondant à la longueur indiquée dans la zone de longueur de l'unité de données de protocole, dans les informations d'en-tête de l'unité de données de protocole agrégée, puis obtenir le type de protocole de l'unité de données de protocole dans les informations d'en-tête de l'unité de données de protocole agrégée correspondant à l'unité de données de protocole

12. Dispositif d'encapsulation par une procédure générique de tramage, GFP pour « *Generic Framing Procedure* », applicable à une plate-forme de transport multi-services, MSTP pour « *Multi-service Transport Platform* », comprenant :

un module d'agrégation, destiné à agréger une pluralité d'unités de données de protocole pour former un paquet agrégé ;

un module d'encapsulation GFP, destiné à encapsuler le paquet agrégé afin d'obtenir une trame GFP ;

le module d'agrégation comprenant :

un module des informations d'en-tête d'une unité de données de protocole agrégée, destiné à renseigner les informations d'en-tête de l'unité de données de protocole agrégée ; et

un module de combinaison, destiné à ajouter, au début de l'unité de données de protocole à agréger, les informations d'en-tête de l'unité de données de protocole agrégée, qui ont été renseignées par le module des informations d'en-tête de l'unité de données de protocole agrégée.

**13.** Dispositif selon la revendication 12, dans lequel le module d'agrégation comprend en outre :

une unité de détermination de l'agrégation, destinée à déterminer si l'unité de données de protocole est la dernière à être agrégée et à commander au module des informations d'en-tête de l'unité de données de protocole agrégée de renseigner des informations d'en-tête suivantes d'une unité de données de protocole agrégée.

**14.** Dispositif selon la revendication 12 ou 13, dans lequel le module des informations d'en-tête de l'unité de données de protocole agrégée comprend :

un premier sous-module, destiné à déterminer si l'unité de données de protocole est une première unité de données de protocole à agréger et/ou à déterminer si un type de protocole de l'unité de données de protocole est compatible avec celui d'une première unité de données de protocole ;
un deuxième sous-module, destiné à renseigner une zone de longueur de l'unité de données de protocole, à renseigner le bit d'identification de protocole et à renseigner le type de protocole en fonction d'un résultat de la détermination, provenant du premier sous-module.

**15.** Dispositif selon la revendication 14, dans lequel le module d'encapsulation GFP comprend :

un troisième sous-module, destiné à ajouter une zone d'indicateur de longueur de charge utile dans l'en-tête principal GFP, en fonction de la longueur du paquet agrégé provenant du module de combinaison, et une zone d'indicateur de type de charge utile, une zone d'indicateur FCS de charge utile, une zone d'indicateur d'en-tête d'extension d'un en-tête de charge utile GFP ;
un quatrième sous-module, destiné à calculer une zone de contrôle d'erreur d'en-tête principale, cHEC pour « *core Header Error Check »,* et une zone de contrôle d'erreur d'en-tête de type, tHEC pour « *type Header Error Check* », et à placer une valeur donnée dans une zone d'indicateur de charge utile d'utilisateur dans l'en-tête de charge utile GFP.

**16.** Dispositif selon la revendication 15, comprenant en outre :

un module de décapsulation GFP, destiné à examiner au moins l'une des zones cHEC et tHEC ainsi que la zone FCS de la trame GFP, à déterminer le type de paquet de l'unité de données de protocole, une position de départ et une position de fin de la trame GFP et à supprimer la zone d'indicateur de type de charge utile, la zone d'indicateur FCS de charge utile et la zone d'indicateur d'en-tête d'extension, dans l'en-tête de charge utile GFP.

**17.** Dispositif selon la revendication 16, comprenant en outre :

un module de désagrégation de paquets, destiné à identifier un paquet agrégé provenant du module de décapsulation GFP, à obtenir une charge utile de l'unité de données de protocole et le type de protocole de l'unité de données de protocole et à traiter l'unité de données de protocole et le type de protocole ou à désagréger l'unité de données de protocole suivante.

|                | Payload Length Indicator | 2 bytes |
|----------------|--------------------------|---------|
| Core header    | cHEC                     | 2 bytes |

Payload header

| 3 bits | 1 bit | 4 bits |        |
|--------|-------|--------|--------|
| PTI    | PFI   | EXI    | 1 byte |
| UPI    |       |        | 1 byte |
| tHEC   |       |        | 2 bytes |

Protocol data unit (PDU)

User payload

GFP FCS  4 bytes

GFP frame structure

# Figure 1

Packet n | Packet 2 | Packet 1

GFP encapsulation

| FCS | Packet 1 | GFP header |
|-----|----------|------------|

| FCS | Packet 2 | GFP header |
|-----|----------|------------|

| FCS | Packet n | GFP header |
|-----|----------|------------|

# Figure 2

| Packet n | Packet 2 | Packet 1 |
|----------|----------|----------|

Packet cascading

| packet n | M | ··· | packet 2 | M | packet 1 | M |
|----------|---|-----|----------|---|----------|---|

GFP encapsulation

| FCS | packet n | M | ··· | packet 2 | M | packet 1 | M | GFP header |
|-----|----------|---|-----|----------|---|----------|---|------------|

| M | the header of each packet cascaded |
|---|------------------------------------|

Figure 3

| 2 bytes | 6 bit | 1 bit | 1 bit | 2 bytes |
|---------|-------|-------|-------|---------|
| PDU Protocol type | Reserved bit | Protocol indicating | Ending indicating | Length of the PDU |

Figure 4

Figure 5

Figure 6

The cascaded packet

↓

Adding a payload length indicator of the GFP core header according to the length of the cascaded packet

↓

Calculate cHEC field

↓

Filling Payload type indicator, payload FCS indicator and extension header indicator fields of the GFP payload header according to the GFP recommendation

↓

Filling UPI field of the GFP payload header for distinguishing from non-cascaded packet

↓

Calculate tHEC

↓

Fill extension frame header of the GFP frame if EXI = 1

↓

Calculate and add GFP FCS if PFI = 1

↓

transmitting direction

## Figure 7a

Obtain the cascaded packet

↓

Ddetermine the packet type of the PDU according to UPI field and pass the PDU to packet de-cascading module to be processed if it is a cascaded packet

↓

Remove the PTI, PFI , EXI fields of the GFP payload header and corresponding header according to the GFP recommendation

↓

Check FCS of the GFP frame if PFI = 1

↓

Check the tHEC field

↓

Determine an ending position of the GFP frame according to the payload length indicator of the GFP core header

↓

Check the cHEC field and determine the starting position of the GFP frame

↓

receiving direction

## Figure7b

EP 1 871 068 B1

Fill in the header information of the PUD cascaded according to the length of the PDU cascaded

Next PDU cascaded

First PDU cascaded — No / Yes

Protocol type consistent with that of the first PDU — Yes / No

Set the protocol indicating bit in the header information of the PDU cascaded

Set the protocol indicating bit in the header information of the PDU cascaded

Set the protocol indicating bit in the header information of the PDU cascaded

Fill in protocol type field in the header information of the PDU cascaded according to actual protocol type of the PDU

Add PDU at the end of the header information of the PDU cascaded

The last PDU — Yes / No

Obtain the cascaded packet

Figure 8

The cascaded packet

De-cascade a next PDU cascaded

Determining the value of protocol indicating bit

0

1

Take bytes with the length indicated in the length field in the header information of the PDU cascaded as the payload from the sixth byte on

Take bytes with the length indicated in the length field in the header information of the PDU cascaded as the payload from the fourth byte on

Acquire protocol type from the header information of the PDU cascaded as a protocol type

Acquire protocol type from the header information of PDU cascaded corresponding to the first PDU as the protocol type of the PDU

Transfer the PDU to a protocol processing module to be processed according to the protocol type

Yes

The last PDU?

No

End

Figure 9

Figure 10

Figure 11

Figure 12